# FASCICULE DE BREVET EUROPEEN

(11) **EP 0 803 282 B1**
(45) Date de publication et mention de la délivrance du brevet: **04.07.2001**
(21) Numéro de dépôt: 97460014.0
(22) Date de dépôt: 27.03.1997
(51) Int. Cl.: B01F 9/06

(54) **Baratte utilisable dans le domaine de l'agroalimentaire**
Drehtrommel für die Landwirtschaft und Nahrungsmittelindustrie
Churning drum for use in the agriculture and food industries

(30) Priorité: 25.04.1996 FR 9605476; 13.09.1996 FR 9611401
(43) Date de publication de la demande: 29.10.1997
(73) Titulaire: ARMOR INOX SA, F-56430 Mauron (FR)
(72) Inventeur: Dreano, Claude, 56430 Mauron (FR)
(74) Mandataire: Maillet, Alain

(56) Documents cités:
- EP-A- 0 188 674
- DE-C- 249 795
- FR-A- 726 959
- GB-A- 679 132
- US-A- 1 866 688

## Description

La présente invention concerne une baratte utilisable dans le domaine de l'agroalimentaire.

On connaît déjà des barattes du type de celle de l'invention. Elles sont généralement constituées d'une cuve sensiblement cylindrique, fermée à une extrémité par une paroi de fond et ouverte à l'autre extrémité par l'intermédiaire d'un col tronconique prolongeant ladite cuve. A l'intérieur de la cuve et du col, sont respectivement prévues des lames perpendiculaires aux parois internes de la cuve et du col. Ces lames présentent une forme d'hélice ou partie d'hélice.

On notera que le pas de ladite hélice dans la cuve peut être plusieurs fois celui de la longueur de la baratte si bien que ladite ou lesdites lames de la cuve présentent une forme sensiblement rectiligne décalées à une extrémité par rapport à une génératrice de la cuve.

Une telle baratte est ainsi prévue pour travailler dans les deux sens de rotation opposés. Dans le premier sens de rotation, la lame permet le brassage du produit contenu dans la cuve tout en le repoussant vers l'arrière de la baratte. Dans le second sens de rotation, la lame repousse le produit vers le col de la baratte et donc vers sa sortie. Le produit contenu dans la cuve est alors extrait de la cuve.

On a pu constater que dans de telles barattes, lorsqu'on cherche à brasser plusieurs produits de caractéristiques physiques relativement différentes, les produits les plus denses et donc les moins fluides se retrouvent vers l'arrière de la baratte alors qu'au contraire les produits les plus légers et donc les plus fluides se retrouvent vers l'entrée de la baratte. Par exemple, lorsqu'on veut réaliser un enrobage cryogénique d'une sauce sur un produit, tel que du riz avec des morceaux de viande, de jambon, de poulet-, etc., au bout d'un temps assez court, le riz est à l'avant de la baratte alors que les autres morceaux, plus volumineux, se retrouvent à l'arrière de la baratte.

On a pu constater que cet effet de ségrégation des produits entre eux est essentiellement dû à l'action de la ou des lames de brassage. En effet, dans le premier sens de rotation, les produits les plus denses sont entraînés plus énergiquement vers l'arrière que les produits les plus légers, ce qui a pour effet de repousser ces derniers vers l'avant, d'où la ségrégation.

On comprendra que cet effet de ségrégation est néfaste à la recherche d'une homogénéité du contenu à mélanger et que l'on ait recherché à résoudre le problème qu'il pose.

On connaît également des malaxeurs comportant, d'une part, une première série de pales hélicoïdales disposées intérieurement à la cuve et, d'autre part, une seconde série de pales hélicoïdales montées également intérieurement à la cuve, mais d'inclinaison inverse à celle de la première série. Un tel malaxeur est notamment montré dans le document FR-A-726 959. L'action combinée des deux séries de pales assure un brassage qui réduit l'effet de ségrégation.

Un problème qui se pose alors est celui de la vitesse d'extraction qui est diminuée de manière importante. En effet, dans le second sens de rotation de la baratte, sens correspondant à l'extraction du produit contenu dans la cuve, la contre-lame agit sur le produit à l'inverse de la lame. Il en résulte que le produit, soumis à l'action de la contre-lame, est, dans ce sens de rotation, repoussé vers l'arrière de la cuve, diminuant d'autant la vitesse d'extraction.

Un but de l'invention est de proposer une solution à ce problème.

A cet effet, la ou chaque contre-lame peut pivoter autour d'un axe situé à une certaine distance de la paroi interne de la cuve de manière à pouvoir prendre toutes les positions comprises entre une première position où une arête repose sur la paroi interne de la cuve et une seconde position où elle est béante. Avantageusement, ladite ou chaque contre-lame peut pivoter librement.

Ainsi, dans le second sens de rotation de la baratte correspondant à l'extraction du produit contenu dans la cuve, la contre-lame pivote sous l'action du produit et devient sans action sur le produit. Il en résulte que la vitesse d'extraction du produit n'est pas ralentie par rapport à une baratte classique sans contre-lame.

Selon un premier mode de réalisation de l'invention, l'axe de pivotement de ladite ou de chaque contre-lame est confondu avec une de ses arêtes longitudinales.

Selon un second mode de réalisation de l'invention, l'axe de pivotement de ladite ou de chaque contre-lame passe dans sa partie médiane. Il délimite une première et une seconde parties contenant respectivement l'arête destinée à reposer sur la paroi de ladite cuve et l'arête opposée à celle-ci. Avantageusement, ladite première partie présente une aire supérieure à l'aire de ladite seconde partie.

Avantageusement encore, ladite seconde partie est plus pesante que ladite première partie.

La cuve d'une baratte est généralement prolongée vers l'avant par un col tronconique qui est pourvu d'une lame en hélice prolongeant ladite lame de la cuve. Or, on a remarqué que cette lame en hélice contribue également fortement au phénomène de ségrégation mentionné ci-dessus. Pour résoudre ce problème, l'invention propose que ladite baratte comporte un écran sur la paroi interne dudit col ou sur la paroi interne de ladite cuve et situé derrière ladite lame en hélice.

Selon des caractéristiques avantageuses de l'invention, ladite partie d'hélice de ladite lame et la partie d'hélice de ladite contre-lame ont des pas sensiblement égaux.

Ladite baratte peut également être pourvue d'au moins une butée pour que ladite contre-lame puisse être arrêtée avec son arête destinée à reposer sur la paroi de ladite cuve qui se trouve en contact avec la paroi interne de ladite cuve. De même, elle peut également être pourvue d'au moins une butée pour limiter l'angle de pivotement de ladite contre-lame. La valeur de cet angle est avantageusement inférieure à 90°.

Selon une autre caractéristique de l'invention, la lame et la contre-lame sont respectivement pourvues de bourrelets prévus pour pouvoir guider le produit contenu dans la baratte respectivement lors de la vidange du produit dans le second sens de rotation de la baratte et lors de l'opération de mélange du produit dans le premier sens de rotation de la baratte.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 est une vue de face d'une baratte selon l'invention,
la Fig. 2 est une vue en coupe selon le plan II/II de la Fig. 1 d'une baratte selon un premier mode de réalisation de l'invention,
la Fig. 3 est une vue en développé d'une baratte selon le premier mode de réalisation de l'invention,
la Fig. 4 est une vue de devant d'une baratte selon l'invention, et
les Figs. 5a et 5b illustrent le fonctionnement d'une baratte selon l'invention respectivement dans un premier sens de rotation correspondant à la phase de brassage et dans un second sens de rotation correspondant à la phase d'extraction du produit de brassage,
la Fig. 6 est une vue en coupe selon un plan équivalent au plan II/II de la Fig. 1 d'une baratte selon un second mode de réalisation de l'invention,
la Fig. 7 est une vue en plan de la contre-lame qui fait l'objet du second mode de réalisation d'une baratte selon l'invention,
les Figs. 8a et 8b illustrent le fonctionnement d'une baratte selon le second mode de réalisation de l'invention respectivement dans un premier sens de rotation correspondant à la phase de brassage et dans un second sens de rotation correspondant à la phase d'extraction du produit de brassage.

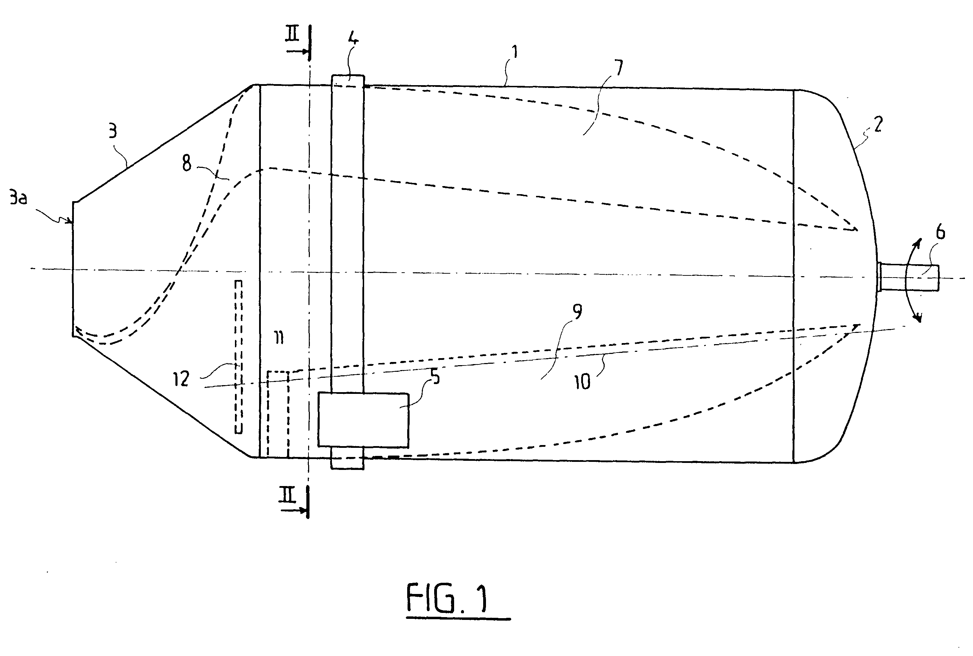

La baratte représentée à la Fig. 1 est essentiellement constituée d'une cuve 1 cylindrique à une première extrémité de laquelle, dite par la suite extrémité arrière, est soudée une paroi de fond 2 et à l'autre extrémité de laquelle, dite extrémité avant, est soudé un col 3 présentant une forme tronconique. A l'extrémité avant du col 3, celui-ci présente une ouverture 3a qui permet, d'une part, l'introduction des produits à brasser dans la baratte et, d'autre part, l'extraction des mêmes produits lorsque ceux-ci ont été brassés.

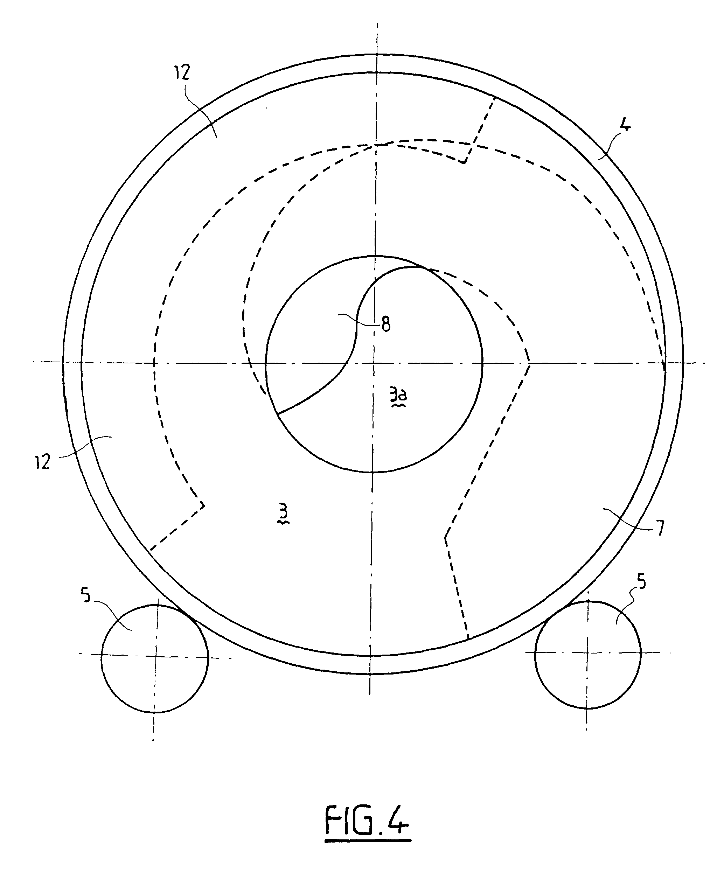

La baratte repose, par l'intermédiaire d'une ceinture de roulement 4, sur deux galets 5 à même hauteur (seul celui de premier plan est visible sur la Fig. 1 et les deux sont visibles sur la Fig. 4) alors qu'elle est entraînée en rotation autour de son axe longitudinal par l'intermédiaire d'un tourillon 6 soudé sur sa paroi de fond 2.

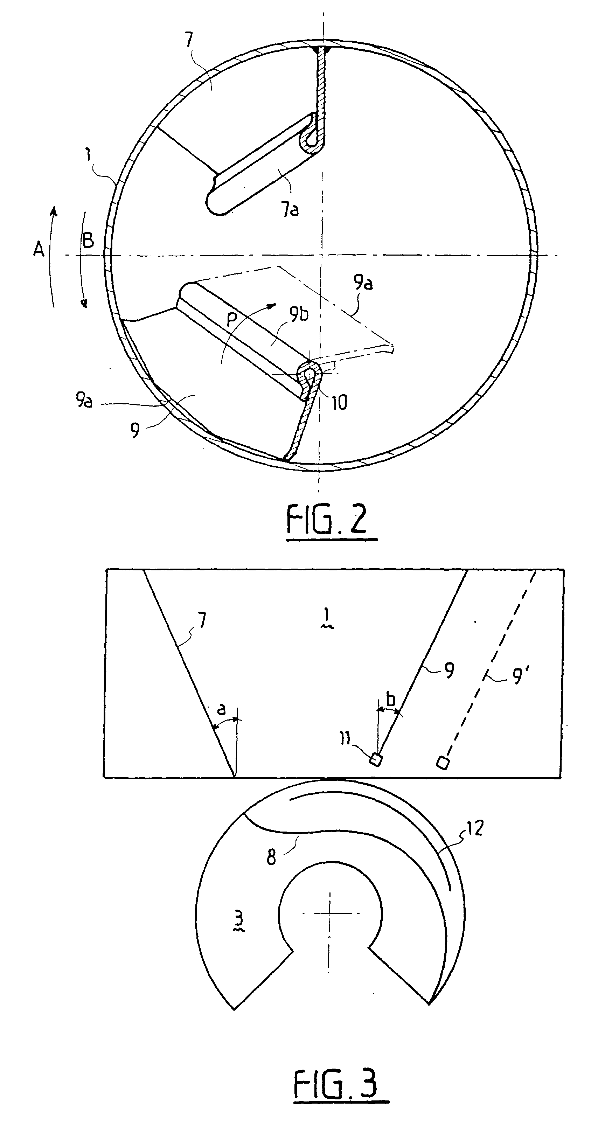

La baratte de la Fig. 1 comprend, comme la plupart des barattes connues jusqu'à ce jour, une lame fixe 7 qui est soudée sur la paroi interne de la cuve 1, perpendiculairement à celle-ci, comme cela est visible sur la Fig. 2. Par rapport à une génératrice du cylindre formant la cuve 1, la lame fixe 7 est inclinée d'un angle a comme cela est visible sur le développé de la Fig. 3. Son extrémité arrière est ainsi décalée par rapport à une génératrice.

On notera que l'on peut considérer que la lame 7 présente une forme en partie d'hélice dont le pas est plusieurs fois supérieur à la longueur de la baratte si bien qu'elle présente alors une forme sensiblement rectiligne.

La lame 7 présente un bourrelet 7a qui est obtenu par rabattement de la lame sur elle-même en son extrémité libre. Ce bourrelet 7a a pour fonction de guider le produit contenu dans la baratte le long du flanc de la lame 7 lors de sa vidange, et ce dans le premier sens de rotation marqué de la flèche A sur la Fig. 2.

Sur la paroi interne de la partie tronconique du col 3, est soudée une lame en hélice 8 qui se trouve en prolongement de la lame 7. Le sens d'enroulement de la lame 8 est le même que celui de la lame 7. Ce sens d'enroulement est tel que, lorsque la baratte tourne dans le sens de rotation montré par la flèche A, le produit a tendance à être repoussé vers le fond 2 de la baratte alors que, lorsqu'elle tourne dans le sens de rotation montré par la flèche B, le produit à tendance à être repoussé vers le col 3 de la baratte puis vers son ouverture 3a. Dans ce dernier cas, le produit contenu dans la cuve 1 en est extrait.

On peut voir sur la Fig. 3 la lame en hélice 8 montée sur le col 3.

Selon l'invention, la baratte comporte une contre-lame 9 qui est montée de manière à pouvoir pivoter librement autour d'un axe 10 situé à une certaine distance de la paroi interne de la cuve 1 de manière à pouvoir prendre toutes les positions comprises entre une première position où son arête libre 9a repose sensiblement sur la paroi interne de la cuve 1 comme cela est représenté en traits forts sur la Fig. 2 et une seconde position où elle est béante comme cela est représenté en traits mixtes fins sur la Fig. 2. A la Fig. 2, on a représenté le mouvement de pivotement possible de la contre-lame 9 par une flèche p. Cette contre-lame 9, quand elle se trouve dans la première position où elle repose sur la paroi interne de la cuve 1, est sensiblement symétrique de la lame 7. Cela est notamment visible sur la Fig. 3 où l'on peut constater que la trace de la contre-lame 9 quand elle est dans cette première position est inclinée d'un angle b de signe opposé à l'angle a d'inclinaison de la lame 7.

Ainsi, lorsque son arête libre 9a est sensiblement en contact avec la paroi interne de la cuve 1, la contre-lame 9 présente, à l'instar de la lame 7, une forme en partie d'hélice. On notera que lorsque l'angle a et l'angle b ont des valeurs égales (mais de signes opposés), les pas desdites parties d'hélice sont égaux, en valeur absolue.

A l'instar de la lame 7, la contre-lame 9 est pourvue d'un bourrelet 9b qui est obtenu par son rabattement sur elle-même. Ce bourrelet 9b est prévu pour guider le produit contenu dans la baratte sur la flanc de la contre-lame 9 lors de l'opération de mélange, et ce dans le second sens de rotation marqué par la flèche B de la Fig. 2.

On remarquera sur la Fig. 3, le bras 11 qui supporte, en son extrémité libre, l'axe 10. Ce bras 11 est également visible sur la Fig. 1. A l'arrière de la baratte, l'axe 10 est supporté directement par le fond 2.

Selon une autre caractéristique de l'invention, la baratte comporte un écran 12 qui, dans l'exemple de réalisation représenté, est soudé sur la paroi interne du col 3. Cet écran 12 est visible sur la Fig. 4 dans laquelle, on n'a volontairement pas représenté la contre-lame pivotante 9, pour la clarté de cette Fig. 4. Sur cette Fig. 4, on voit par contre, les galets 5 et la ceinture 4, la lame en hélice 8 et la lame 7. On remarquera que l'écran 12 est placé derrière la lame en hélice 8, comme cela est également visible sur la Fig. 1.

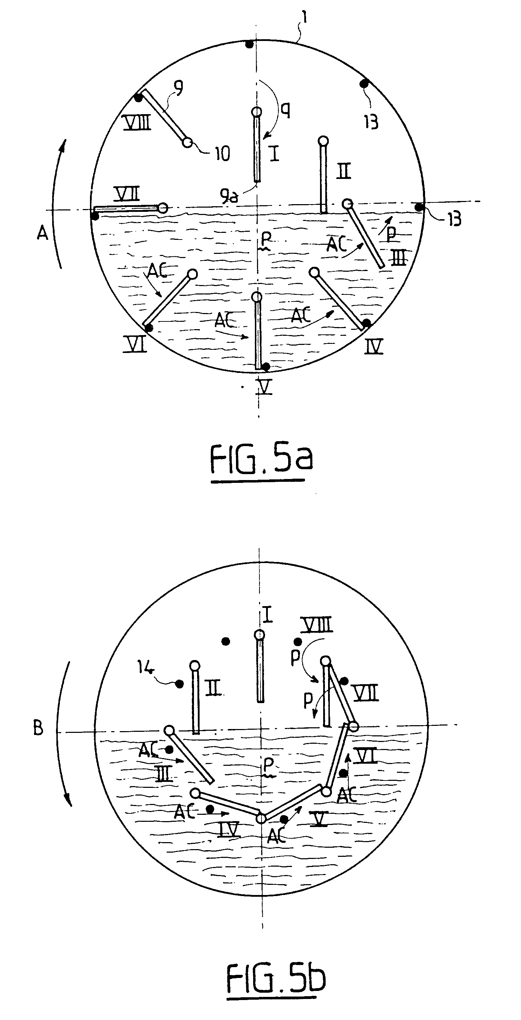

On va maintenant expliquer le fonctionnement d'une baratte selon l'invention et, ce, en relation avec les Figs. 5a et 5b. Sur ces Figs. 5a et 5b, seules sont représentées la cuve 1 et la contre-lame 9 ainsi que son axe de pivotement 10, et ce dans un seul plan transversal. Ce plan est par exemple celui de coupe II/II de la Fig. 1. On a montré par des ondulations le fait que la cuve 1 contient un produit P. A la Fig. 5a, la cuve 1 est soumise à une rotation dans le sens montré par une flèche A. Ce sens correspond à celui qui est utilisé pendant l'opération de mélange du produit P contenu dans la cuve 1. A la Fig. 5b, la cuve 1 est soumise à une rotation dans le sens opposé montré par une flèche B correspondant au sens utilisé pendant l'opération d'extraction du produit P hors de la baratte par son ouverture 3a. Dans chacune de ces Figs. 5a et 5b, on a représenté huit positions de contre-lame différentes, marquées par des chiffres romains I à VIII.

On va d'abord considérer la Fig. 5a. Dans la position I, la contre-lame 9, par son propre poids, se place verticalement avec son arête libre 9a qui est éloignée de la paroi interne de la cuve 1. Elle garde cette position verticale, à la position II, où son extrémité libre commence à pénétrer dans le produit contenu dans la cuve 1. Dans la position III, la contre-lame 9 est soumise à l'action du produit P, action symbolisée par la flèche Ac, ce qui a pour effet de la faire pivoter selon la flèche p. A la position IV, elle a complètement pivoté et se retrouve en butée sur la paroi interne de la cuve 1.

On a symbolisé par différents points 13, une butée dans les différentes positions I à VIII prévue pour recevoir l'arête libre 9a de la contre-lame, mais on précise que cette butée peut ne pas exister et, dans ce cas, la contre-lame 9 est arrêtée dans son mouvement de pivotement p par son seul contact avec la paroi interne de la cuve 1, comme cela est visible sur la Fig. 2. Si elle existe, elle n'est pas nécessairement arrangée comme cela est représenté, mais plutôt dans l'axe 10.

Dans les positions V et VI, le produit agit toujours sur la contre-lame 9 et celle-ci est toujours en butée sur la paroi de la cuve.

Dans les positions VII et VIII, le produit n'agit plus sur la contre-lame 9, mais c'est son propre poids qui agit. La contre-lame 9 reste donc en butée sur la paroi interne de la cuve 1.

De nouveau en I, la contre-lame 9 se retrouve en position instable où, en quelque sorte poussée par la butée 13, elle pivote pour se retrouver verticale avec son arête libre opposée à la paroi de la cuve 1. Ce pivotement est symbolisé par une flèche marquée q.

On constate que lorsqu'elle se trouve plongée dans le produit P, c'est-à-dire dans les positions marquées III à VII, la contre-lame 9 agit comme si elle était liée à la paroi interne de la cuve 1. Elle se libère de cette paroi dans les positions I et II, mais on comprendra que, là, elle n'a pas d'effet sur le produit P contenu dans la cuve.

Du fait qu'elle est montée dans la cuve 1 de manière que, lorsqu'elle est en butée sur la paroi de la cuve 1, elle soit symétrique de la lame 7, comme cela a précédemment été expliqué, son action sur le produit P est inverse de celui de la lame 7. Dans ce sens de rotation de la baratte, l'action de la lame 7 est de repousser le produit vers l'arrière de la baratte, c'est-à-dire vers la fond 2. Par conséquent la contre-lame 9 a tendance à repousser le produit vers l'avant de la baratte, ce qui neutralise l'action de la lame 7.

Cependant, dans ce sens de rotation, la face arrière de la lame 8 agit également, et de manière importante, pour repousser le produit vers l'arrière. Cette action est en partie neutralisée par l'action de l'écran 12 sur le col 3.

On va maintenant considérer la Fig. 5b. Dans la position I, la contre-lame 9 est verticale du fait de son propre poids. Elle reste verticale dans la position II où son extrémité libre commence à entrer en contact avec le produit P contenu dans la cuve 1. Là, soumise à l'action Ac du produit P, elle pivote de manière à se trouver béante et éloignée de la paroi interne de la cuve 1. Il peut être prévu une butée 14 pour limiter l'angle de pivotement de ladite contre-lame 9. A l'instar de la butée 13, la butée 14 peut ne pas exister car la contre-lame 9 reste naturellement en position béante. Cependant, si elle est prévue, elle n'est pas arrangée nécessairement comme cela est représenté, mais plutôt dans l'axe 10.

La contre-lame 9 reste dans cette position ouverte tant qu'elle baigne dans le produit P contenu dans la cuve 1, c'est-à-dire dans les positions III à VI. On notera que les deux faces de la contre-lame 9 sont, dans ces positions, léchées par le produit P contenu dans la cuve 1 si bien qu'aucun produit ne peut s'agglomérer sur ces faces.

Dans la position VII, la contre-lame 9 est sortie du produit P et, soumise à l'action de son propre poids, elle pivote, comme cela est représenté par la flèche marquée p, de manière à se retrouver verticale, position qu'elle garde jusqu'à la fin du cycle.

On constate que dans ce sens de rotation de la baratte, la contre-lame 9 est sans action sur le produit contenu dans la cuve 1. On rappelle que ce sens de rotation est celui de l'extraction du produit par l'ouverture 3a de la baratte. On comprendra que cette extraction n'est pas entravée par la contre-lame 9.

Comme mentionné ci-dessus, l'écran 12 a une action dans le sens de rotation de la baratte qui correspond au brassage puisqu'il est situé derrière la lame en hélice 8. Par contre, pour la même raison, il est sans effet sur l'action de la lame 8 dans le sens de rotation de la baratte qui correspond à l'extraction du produit.

On notera que l'action de l'écran 12 peut s'avérer insuffisant pour éviter de repousser le produit vers l'arrière de la baratte. Aussi, il peut s'avérer nécessaire de prévoir deux contre-lames 9 et 9' orientées de la même manière, avantageusement du même angle, comme cela est représenté en pointillés sur la Fig. 3.

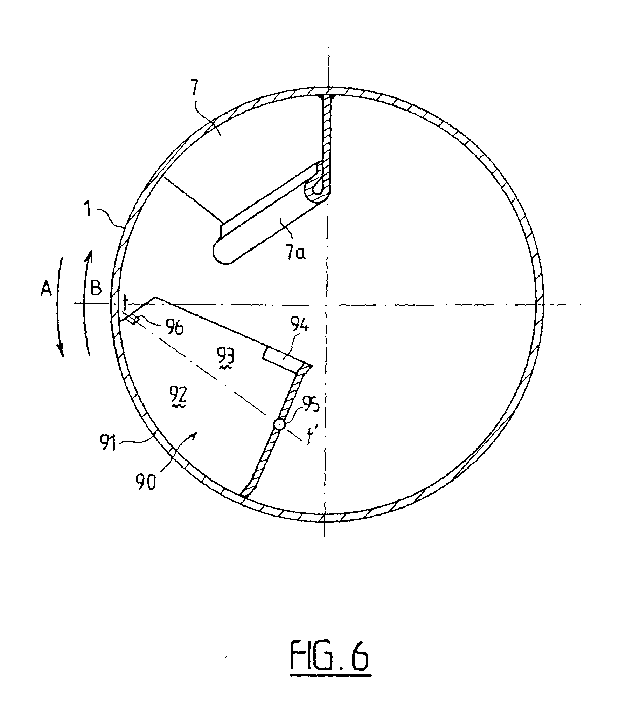

Aux Figs. 6, 7, 8a et 8b, on a représenté un mode de réalisation de l'invention qui s'est avéré particulièrement adapté pour brasser ou mélanger des produits qui sont de structure fragile. Pour ces produits, on a pu constater qu'avec la baratte selon le premier mode de réalisation de l'invention, lorsque la contre-lame 9 entre dans le produit puis pivote sous l'action du produit, elle a tendance à l'endommager. Cette situation a lieu dans les positions marquées II et III à la Fig. 5a.

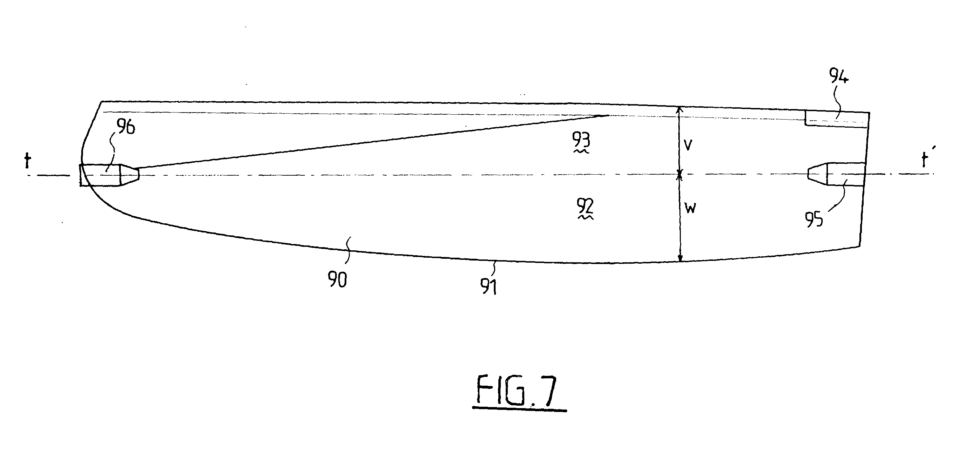

Pour résoudre ce problème particulier, on a prévu un second mode de réalisation qui est représenté à la Fig. 6 et qui prévoit l'utilisation d'une contre-lame 90 que l'on peut également voir à la Fig. 7. Cette contre-lame 90 est pourvue d'une arête 91 qui est destinée à venir en contact avec la paroi interne de la cuve 1. L'axe de pivotement tt' passe dans la partie médiane de la contre-lame 90 et délimite deux parties 92 et 93 contenant respectivement l'arête 91 et l'arête qui est opposée à l'arête 91. Pour des raisons explicitées ci-dessous, l'aire de la partie 92 est supérieure à l'aire de la partie 93. Pour ce faire, la distance W de l'axe tt' à l'arête 91 est supérieure à la distance V de l'axe tt' à l'arête opposée à l'arête 91.

La partie 93 est de plus pourvue d'un contrepoids 94 qui permet à la partie 93 d'être plus pesante que la partie 92. Ainsi, la contre-lame 90 a une tendance naturelle à se présenter verticalement avec l'arête 91 tournée vers le haut, c'est-à-dire à l'inverse de ce qui est représenté à la Fig. 7.

On a également représenté à la Fig. 7 les tourillons 95 et 96 qui matérialisent l'axe de pivotement tt'.

On notera que dans le premier mode de réalisation de l'invention, l'axe de pivotement de la contre-lame est situé le long de l'arête opposée à l'arête destinée à reposer sur la paroi de la cuve 1.

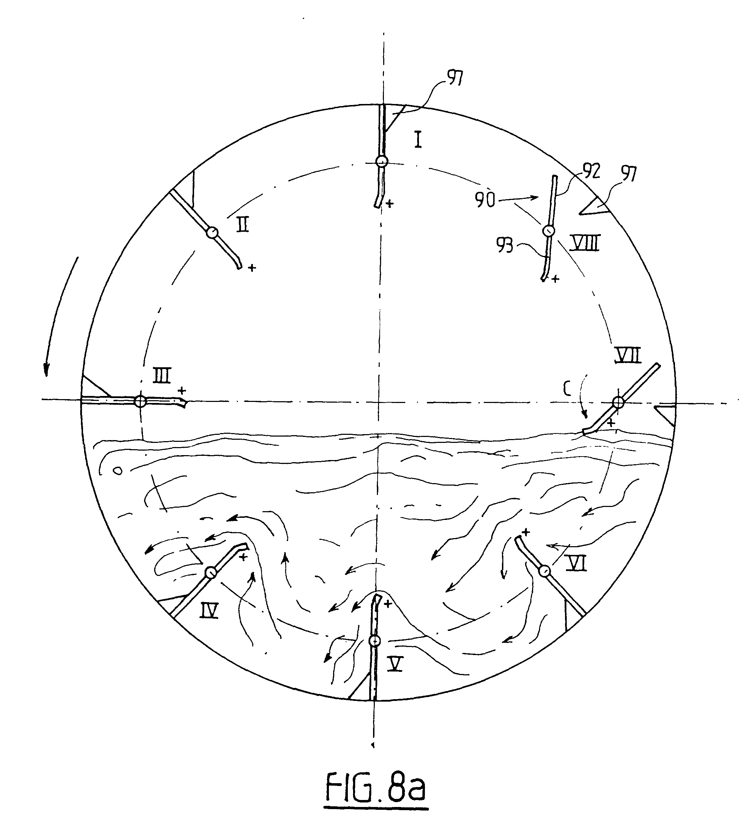

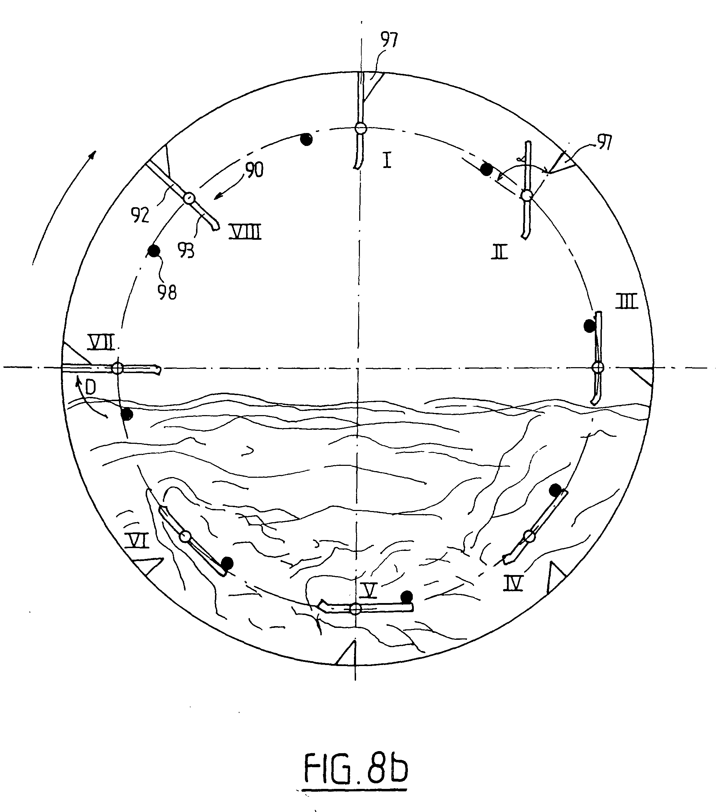

On va maintenant expliquer le fonctionnement de ce mode particulier de réalisation et, ce, en relation avec les Fig. 8a et 8b.

Sur ces Figs. 8a et 8b, on a également représenté une butée 97 sur laquelle la contre-lame 90 prend appui lorsque son arête 91 repose sur la paroi de la cuve 1. On notera que d'autres moyens qu'une butée 97 pourraient être également prévus pour arrêter la contre-lame 90 sur la paroi de la cuve 1.

On a également marqué d'un signe + la partie 93 la plus pesante de la contre-pale 90.

On notera enfin que le produit remplit la cuve 1 jusqu'à un niveau inférieur à la moitié.

On va d'abord considérer la Fig. 8a qui correspond à la phase de mélange de la baratte. Dans les positions I et II, la contre-lame 90 se positionne naturellement arrêtée par la butée 97 de manière que sa partie 93 la plus pesante se trouve tournée vers le bas.

Au moment de l'attaque dans le produit dans la position III, la contre-lame 90 est en butée, l'arête 91 reposant alors sur la paroi interne de la cuve 1. On remarquera que la contre-lame 90 est alors déjà en place et qu'elle est tout de suite active.

Dans les positions III à VII, la contre-lame 90 subit l'action du produit, d'une part, sur sa partie 92 entre l'axe de pivotement tt' et l'arête 91 et, d'autre part, sur sa partie 93 entre l'axe de pivotement tt' et l'arête opposée à l'arête 91. On a représenté par des flèches les lignes de circulation du produit sous l'action de la contre-lame 90. Du fait que la partie 92 présente une aire plus importante que sur la partie 93, les forces résultats des pressions sur la contre-lame 90, sont plus importantes sur la partie 92 que sur la partie 93. Il en résulte que la contre-lame 90 garde sa position en butée contre la paroi de la cuve 1 tant qu'elle se trouve dans le produit, c'est-à-dire de la position III à la position VII. En particulier, de la position V à la position VII, elle ne basculera pas malgré que sa partie la plus pesante 93 soit tournée vers le haut. On notera que la différence entre les forces de pression sur les parties 92 et 93 est supérieure à la force de rappel résultat de l'action du contrepoids 94.

C'est juste à la sortie du produit que la contre-lame 90 va basculer pour prendre la position marquée VIII. Ce retournement est symbolisé par une flèche C.

On va maintenant considérer la Fig. 8b qui concerne la vidange de la cuve 1. Dans les positions I et II, la contre-lame se place naturellement verticalement avec sa partie la plus pesante 93 tournée vers la bas. Elle entre dans le produit verticalement (position III). Dans les positions IV à VII, l'équilibre des pressions sur les deux faces de la contre-lame 90 est tel que celle-ci reste sensiblement parallèle à une tangente à la paroi de la cuve 1. Elle est donc sans action sur le produit contenu dans la cuve 1. On a également représenté les lignes de circulation du produit et on peut constater qu'elles sont sensiblement parallèles à la contre-lame 90. Dans la position VII, la contre-lame 90 se retourne en suivant le sens de la flèche D de manière à se trouver de nouveau en butée. Elle garde cette position en VIII.

On notera que pour le retournement puisse se faire dans le bon sens, il peut être nécessaire de prévoir une butée 98 qui limite l'angle d'ouverture de la contre-lame 90 à un angle α inférieur à 90°.

Ce mode de réalisation est particulièrement avantageux dans la mesure où l'action de la contre-lame 90, dans la phase de mélange, a lieu dès son entrée dans le produit, ce qui n'était pas le cas dans le premier mode de réalisation. Il en résulte que le produit n'est pas battu et que ce mode de réalisation est particulièrement bien adapté à des produits de structure fragile.

On notera que dans ce second mode de réalisation, l'utilisation d'un écran 12 est souhaitable.

## Revendications

1. Baratte utilisable dans l'agroalimentaire, du type qui est constituée d'une cuve horizontale (1) sensiblement cylindrique fermée à une extrémité, dite extrémité arrière, et ouverte à l'autre extrémité dite extrémité avant, ladite cuve étant pourvue d'au moins une lame (7) sur la paroi interne de ladite cuve (1) se présentant sous la forme d'une partie d'hélice telle que, dans un premier sens de rotation le produit qu'elle contient soit brassé et ait tendance à être repoussé vers l'arrière de ladite cuve (1) et que, dans un second sens de rotation le produit soit repoussé vers l'extrémité ouverte pour pouvoir être extrait de ladite cuve (1), ladite cuve étant pourvue d'au moins une contre-lame (9, 9', 90) se présentant sous la forme d'une partie d'hélice telle que, dans ledit premier sens de rotation, le produit que contient ladite cuve (1) et qui est soumis à son action ait tendance à être repoussé vers l'avant de ladite baratte de manière à contrebalancer l'effet de ladite lame (7), caractérisé en ce que la ou chaque contre-lame (9) peut pivoter autour d'un axe (10) situé à une certaine distance de la paroi interne de la cuve (1) de manière à pouvoir prendre toutes les positions comprises entre une première position où elle repose sur la paroi interne de la cuve (1), en étant sensiblement symétrique à la lame (7) avec une première arête (9a, 91) reposant sur la paroi interne de la cuve (1) pour ne pas entraver l'extraction et une seconde position où elle est béante pour neutraliser l'action de la lame (7).

2. Baratte selon la revendication 1, caractérisée en ce que la ou chaque contre-lame (9, 9', 90) peut pivoter librement.

3. Baratte selon la revendication 1 ou 2, caractérisée en ce que l'axe de pivotement de ladite ou de chaque contre-lame (9, 9', 90) est confondu avec une de ses arêtes longitudinales.

4. Baratte selon la revendication 1 ou 2, caractérisée en ce que l'axe de pivotement de ladite ou de chaque contre-lame (9, 9', 90) passe dans sa partie médiane.

5. Baratte selon la revendication 4, caractérisée en ce que l'axe de pivotement de ladite ou de chaque contre-lame délimite une première et une seconde parties (92 et 93) contenant respectivement l'arête (91) destinée à reposer sur la paroi de ladite cuve (1) et l'arête opposée à celle-ci, ladite première partie (92) présentant une aire supérieure à l'aire de ladite seconde partie (93).

6. Baratte selon la revendication 4 ou 5, caractérisée en ce que l'axe de pivotement de ladite ou de chaque contre-lame délimite une première et une seconde parties (92 et 93) contenant respectivement l'arête (91) destinée à reposer sur la paroi de ladite cuve (1) et l'arête opposée à celle-ci, ladite seconde partie (93) étant plus pesante que ladite première partie (93).

7. Baratte selon une des revendications précédentes, ladite cuve (1) étant prolongée vers l'avant par un col tronconique (3) qui est pourvu d'une lame en hélice (8) prolongeant ladite lame (7) dans un même sens d'enroulement pour repousser le produit vers l'arrière dans le premier sens de rotation de la baratte, caractérisée en ce qu'elle comporte en outre un écran (12) sur la paroi interne dudit col (3) ou sur la paroi interne de ladite cuve (1) et situé derrière ladite lame en hélice (8) permettant de neutraliser en partie l'action de la lame (8).

8. Baratte selon une des revendications précédentes, caractérisée en ce que ladite partie d'hélice de ladite lame (7) et la partie d'hélice de ladite contre-lame (9) ont des pas sensiblement égaux.

9. Baratte selon une des revendications précédentes, caractérisée en ce qu'elle est pourvue d'au moins une butée (13, 97) pour que ladite ou chaque contre-lame (9, 9', 90) puisse être arrêtée avec une arête (9a, 91) en contact avec la paroi interne de ladite cuve (1).

10. Baratte selon une des revendications précédentes,
caractérisée en ce qu'elle est pourvue d'au moins une butée (14, 98) pour limiter l'angle de pivotement de ladite contre-lame (9).

11. Baratte selon la revendication 10, caractérisée en ce que l'angle de pivotement (α) est limité à une valeur inférieure à 90°.

12. Baratte selon une des revendications précédentes, caractérisée en ce que la lame (7) et la contre-lame (9) sont respectivement pourvues de bourrelets (7a et 9b) prévus pour pouvoir guider le produit contenu dans la baratte respectivement lors de la vidange du produit dans le second sens de rotation de la baratte et lors de l'opération de mélange du produit dans le premier sens de rotation de la baratte.

## Patentansprüche

1. Drehtrommel für die Landwirtschaft und Nahrungsmittelindustrie, bestehend aus einem zylindrischen, im wesentlichen horizontalen Bottich (1), der an einem, nämlich dem hinteren Ende geschlossen und am anderen, nämlich dem vorderen Ende offen ist, wobei der Bottich (1) auf seiner Innenwand mit wenigstens einem Blatt (7) ausgerüstet ist, das als schneckenförmiges Teil ausgebildet ist, so daß in einer ersten Drehrichtung das in ihm enthaltene Produkt durchgerührt wird und die Tendenz hat, zum hinteren Teil des Bottichs (1) zurückgeschlagen zu werden, und daß in einer zweiten Drehrichtung das Produkt zum offenen Ende hin zurückgeschlagen wird, so daß es aus dem Bottich (1) ausgetragen werden kann, wobei der Bottich mit wenigstens einem als schneckenförmiges Teil ausgebildeten Gegen-Blatt (9, 9', 90) ausgerüstet ist, im erstgenannten Drehsinn, wobei das in dem Bottich (1) enthaltene und dessen Wirkungsweise unterworfene Produkt die Tendenz hat, in den vorderen Teil des Bottichs zurückgeschlagen zu werden, wobei es die Wirkung des Blattes (7) ausbalanciert, dadurch gekennzeich net, daß das oder jedes Gegen-Blatt (9) sich um eine Achse (10) drehen kann, die sich in einiger Entfernung von der Innenwand des Bottichs (1) befindet, so daß es alle möglichen Positionen einnehmen kann zwischen einer ersten Position, in der es auf der Innenwand des Bottichs (1) ruht, im wesentlichen symmetrisch zum Blatt (7) mit einer ersten Kante (9a, 91), die auf der Innenwand des Bottichs (1) ruht, um das Austragen nicht zu behindern, und einer zweiten Position, in der es klafft, um die Wirkung des Blattes (7) zu neutralisieren.

2. Bottich nach Anspruch 1, dadurch gekennzeichnet, daß das oder jedes Gegen-Blatt (9, 9', 90) frei drehbar gelagert ist.

3. Bottich nach Anspruch 1 oder 2, dadurch gekennzeichnet, daß die Drehachse des oder jedes Gegen-Blattes (9, 9', 90) mit einer ihrer Längs-Kanten zusammenfällt.

4. Bottich nach Anspruch 1 oder 2, dadurch gekennzeichnet, daß die Drehachse des oder jedes Gegen-Blattes (9, 9', 90) in seinem mittleren Teil verläuft.

5. Bottich nach Anspruch 4, dadurch gekennzeichnet, daß die Drehachse des oder jedes der Gegen-Blätter einen ersten und einen zweiten Teil (92 und 93) begrenzt, welche jeweils die Kante (91), die auf der Wand des Bottichs (1) ruht und die ihr gegenüberliegende Kante enthalten, wobei sich der erste Teil (92) gegenüber dem zweiten Teil (93) auf einer höheren Ebene befindet.

6. Bottich nach Anspruch 4 oder 5, dadurch gekennzeichnet, daß die Drehachse des oder jedes der Gegen-Blätter einen ersten und zweiten Teil (92 und 93) begrenzt, die jeweils die Kante (91), die auf der Wand des Bottichs (1) ruht und die ihr gegenüberliegende Kante enthalten, wobei der zweite Teil (93) schwerer ist als der erste Teil (92).

7. Bottich nach einem der vorstehenden Ansprüche, wobei der Bottich (1) durch einen kegelstumpfartigen Hals (3) nach vorn verlängert ist, der mit einem wendelförmigen Blatt (8) ausgerüstet ist, welches das Blatt (7) in gleicher Abrollrichtung verlängert, um das Produkt in der ersten Drehrichtung des Bottichs nach hinten zurückzuschlagen, dadurch gekennzeichnet, daß der Bottich außerdem eine Abschirmung (12) auf der Innenwand des Halses (3) oder auf der Innenwand des Bottichs (1) besitzt, welche sich hinter dem wendelförmigen Blatt (8) befindet, wodurch die Wirkung des Blattes (8) teilweise neutralisiert wird.

8. Bottich nach einem der vorstehenden Ansprüche, dadurch gekennzeichnet, daß der wendelförmige Teil des Blattes (7) und der wendelförmige Teil des Gegen-Blattes (9) im wesentlichen die gleiche Steigung besitzen.

9. Bottich nach einem der vorstehenden Ansprüche, dadurch gekennzeichnet, daß er mit wenigstens einem Anschlag (13, 97) ausgerüstet ist, so daß das oder jedes Gegen-Blatt (9, 9', 90) mit einer Kante (9a, 91), die sich mit der Innenwand des Bottichs (1) im Kontakt befindet, abgestoppt werden kann.

10. Bottich nach einem der vorstehenden Ansprüche, dadurch gekennzeichnet, daß er mit wenigstens einem Anschlag (14, 98) zur Begrenzung des Drehwinkels des Gegen-Blattes (9) ausgerüstet ist.

11. Bottich nach Anspruch 10, dadurch gekennzeichnet, daß der Drehwinkel α auf einen Wert geringer als 90° begrenzt ist.

12. Bottich nach einem der vorstehenden Ansprüche, dadurch gekennzeichnet, daß das Blatt (7) und das Gegen-Blatt (9) jeweils mit Wülsten (7a und 9b) ausgestattet sind, damit das in dem Bottich enthaltene Produkt bei seiner Entleerung in der zweiten Drehrichtung des Bottichs und beim Mischvorgang des Produktes in der ersten Drehrichtung des Bottichs entsprechend geleitet werden kann.

## Claims

1. A churn for use in the farm produce industry of the type which consists of a horizontal vat (1) more or less cylindrical and closed at one extremity, called the rear extremity and open at the other extremity called the front extremity, the said vat being fitted with at least one blade (7) on the internal wall of the said vat (1) semi helical in form such that in a first direction of rotation the product contained therein is stirred and has a tendency to be pushed to the rear of the said vat (1) and that in a second direction of rotation, the product is pushed back towards the open extremity so as to be extracted from the said vat (1), the aforesaid vat being fitted with at least one counter blade (9, 9', 90) presenting in a semi helical shaped form such that, in the said first direction of rotation, the product contained in the said vat (1) and which is subjected to its action has a tendency to be pushed back towards the front of the said churn so as to counteract the effect of the said blade (7), characterised in that the or each counter blade (9) can pivot around an axis⁴ (10) located at a given distance from the internal wall of the vat (1) such as to be able take up all positions inclusive between an initial position where it rests on the internal wall of the vat (1), being more or less symmetrical to the blade (7) with a first edge (9a, 91) resting on the internal wall of the vat (1) so as not to hamper extraction and a second position where it is wide open in order to neutralise the action of the blade (7),

2. Churn according to claim 1, characterised in that the counter blade(s) (9, 9', 90) can pivot freely.

3. Churn according to claim 1 or 2, characterised in that the pivoting axis of the said or each counter blade(s) (9, 9', 90) is merged with one of its/their longitudinal edges.

4. Churn according to claim 1 or 2, characterised in that the pivotal axis of the said or each counter blade(s) (9, 9', 90) passes through its/their median part.

5. Churn according to claim 4, characterised in that the pivotal axis of the said or each counter blade(s) demarcates a first and a second section (92 and 93) containing respectively the edge (91) intended to rest on the wall of the said vat (**1**) and the edge facing this, the said first section (92) having a greater surface area to the surface area of the second section (93).

6. Churn according to claims 4 or 5, characterised in that the pivotal axis of the said or each counter blade(s) demarcates a first and a second section (92 and 93) containing respectively, edge (91) intended to rest on the wall of the said vat (1) and the edge facing this one, the said second part (93) being heavier than the said first part (93).

7. Churn according to one of the preceding claims, the said vat (1) being extended towards the front by a flattened conical neck (3) which is fitted with a helical blade lengthening the said blade (7) in the same turning direction in order to drive the product back towards the rear in a first direction of rotation of the churn, characterised in that it consists moreover of a shield (12) on the internal wall of the said neck (3) or on the internal wall of the said vat (1) and situated behind the said helical blade (8), enabling the action of the blade (8) to be neutralised in part,

8. Churn according to one of the preceding claims, characterised in that the said part of the helix of the said blade (7) and the helical part of the said counter blade (9) have more or less equal pitch.

9. Chum according to one of the preceding claims, characterised in that it is fitted with at least one stop (13, 97) so that said or each counter blade(s) (9, 9', 90) may be stopped with an edge (9a, 91) in contact with the internal wall of the said vat (1).

10. Chum according to one of the preceding claims, characterised in that it is fitted with at least one stop (14, 98) in order to limit the pivoting angle of the said counter blade (9).

11. Churn according to claim 10, characterised in that the pivoting angle (α) is limited to a figure less than 90°.

12. Churn according to one of the preceding claims, characterised in that blade (7) and counter blade (9) are fitted respectively with rubbing strips (7a and 9b) provided so as to guide the product contained in the chum during emptying in the second direction of rotation of the churn and during the operation of product mixing in the first direction of rotation of the churn.
